# EUROPÄISCHE PATENTSCHRIFT

(11) **EP 4 089 303 B1**
(45) Veröffentlichungstag und Bekanntmachung des Hinweises auf die Patenterteilung: **15.07.2026**
(21) Anmeldenummer: 22156236.6
(22) Anmeldetag: 11.02.2022
(51) Int. Cl.: F16K 1/44, F16K 11/044

(54) **3/2-WEGEVENTIL, HYDRAULIKBAUGRUPPE UND ZUGEHÖRIGE WÄRMEPUMPE**
3/2-WAY VALVE, HYDRAULIC ASSEMBLY AND ASSOCIATED HEAT PUMP
SOUPAPE À 3/2 VOIES, MODULE HYDRAULIQUE ET POMPE À CHALEUR ASSOCIÉE

(30) Priorität: 14.05.2021 DE 102021112551
(43) Veröffentlichungstag der Anmeldung: 16.11.2022
(73) Patentinhaber: Stiebel Eltron GmbH & Co. KG, 37603 Holzminden (DE)
(72) Erfinder: Hüge, Carsten, 37287 Wehretal (DE); Schiefelbein, Kai, 37671 Höxter (DE)

(56) Entgegenhaltungen:
- WO-A1-2020/225032
- CN-B- 104 948 752
- DE-A1- 2 509 716
- US-A- 3 525 364
- US-A- 5 152 265
- US-A1- 2020 263 880

## Beschreibung

Die vorliegende Erfindung betrifft ein 3/2-Wegeventil, ein Hydraulikmodul mit dem 3/2 Wegeventil und eine Wärmepumpe mit dem Hydraulikmodul.

Ein Ventil ist zum Beispiel aus der WO 2020/225032 A1 bekannt. Hier weist das Ventil eine Bohrung auf, die sich um eine Betätigungsachse erstreckt, wobei ein Kolben innerhalb der Bohrung zwischen einer ersten Arbeitsposition und einer zweiten Arbeitsposition betätigt wird, wobei das Ventil weiter einen ersten umlaufenden Dichtungsflügel und einen zweiten umlaufenden Dichtungsflügel aufweist, die auf dem Kolben angeordnet sind. In der ersten Arbeitsposition stößt der erste Dichtungsflügel an eine äußere Wand einer ersten Aussparung und der zweite Dichtungsflügel stößt an eine innere Wand einer zweiten Aussparung, um einige Strömungswege zu öffnen und andere Strömungswege schließen. In der zweiten Arbeitsposition stößt der erste Dichtungsflügel an eine innere Wand der ersten Aussparung und der zweite Dichtungsflügel stößt an eine äußere Wand der zweiten Aussparung, um einige Strömungspfade zu schließen und andere Strömungswege öffnen.

In der CN 104 948 752 B wird ein Mehrwegeventil vorgeschlagen, das ein in einer Ventilkammer eines Ventilgehäuses bewegbares Ventilglied enthält, das über einen Hauptkörper und einen daran fixierten, elastisch verformbar ausgebildeten Dichtteller verfügt. Der Dichtteller kooperiert axial mit mindestens einem ihm gegenüberliegenden, am Ventilgehäuse angeordneten ringförmigen Ventilsitz. Damit sich der Dichtteller während seiner Anlage an einem Ventilsitz durch die auf ihn einwirkenden Fluidkräfte nicht übermäßig verformt, ist er an seiner radialen Außenumfangsfläche von einem ausschließlich an dem Dichtteller fixierten Stützring umschlossen.

Aus der DE 25 09 716 A1 ist ein Fünf-Wege-Steuerventil zum Steuern eines Mediumstromes mit einer im Ventilgehäuse in axialer Richtung zwischen zwei Stellungen hin und her verschieblichen Verschlussvorrichtung bekannt, die ein zum Umsteuern des von der Druckmittelquelle kommenden Mediumstromes dienendes Verschlussglied mit U-förmigem Querschnitt und mit elastischen Lippen besitzt, und mit zwei dem Verschlussglied zugeordneten Ventilsitzen, deren Abstand zur Längsmittelachse der Verschlussvorrichtung größer als der Abstand dieser Achse von den Wurzeln der Lippen des Verschlussgliedes ist, wobei zwischen den Ventilsitzen und dem Verschlussglied eine der axialen Verstellbewegung des Verschlussgliedes entsprechende relative Verschiebebewegung in Richtung der Längsmittelachse der Verschlussvorrichtung zwischen zwei Endstellungen stattfinden kann, in denen das Verschlussglied an jeweils einem der Ventilsitze mit einer Lippe dichtend anliegt.

In der US2020/263880 A1 wirt ein hydraulisches System beschrieben, umfassend ein Dreiwegeventil, wobei das Dreiwegeventil einen ersten Anschluss für die Verbindung mit einem Primärwärmetauscher durch die Umwälzpumpe, einen zweiten Anschluss und einen dritten Anschluss für die Verbindung mit dem Heizkreislauf bzw. mit einem Sekundärwärmetauscher umfasst. Das Dreiwegeventil ist zwischen zwei Positionen umschaltbar, in denen der erste Anschluss mit dem zweiten Anschluss oder mit dem dritten Anschluss in Flüssigkeitsverbindung steht. Das Dreiwegeventil reagiert auf den von einer Umwälzpumpe ausgeübten Druck und verfügt über ein verschiebbares Sperrelement, das aufgrund von Übergängen zwischen einem Aus-Zustand und einem Ein-Zustand der Umwälzpumpe bewegt werden kann. Das Sperrelement weist ein Paar Dichtflächen auf, die voneinander weg weisen und dazu geeignet sind, hin- und hergehend in jeweils gegenüberliegende Sitze des Dreiwegeventils einzugreifen.

Wärmepumpen sind allgemein bekannt und betreffen Maschinen, die unter Aufwendung von technischer Arbeit thermische Energie aus einem Reservoir mit niedrigerer Temperatur - zum Beispiel die Umgebungsluft oder Sole - aufnimmt und - zusammen mit der Antriebsenergie - als Nutzwärme auf ein zu beheizendes System mit höherer Temperatur, insbesondere ein Heizungssystem und/oder ein Warmwassersystem, überträgt.

Wärmepumpen werden in der Regel mit Medien betrieben, die bei niedrigem Druck unter Wärmezufuhr verdampfen und nach der Verdichtung auf einen höheren Druck unter Wärmeabgabe wieder kondensieren. Der Druck wird so gewählt, dass die Temperaturen des Phasenübergangs einen für die Wärmeübertragung ausreichenden Abstand zu den Temperaturen von Wärmequelle und Wärmesenke haben.

Aus EP 2 312 224 ist beispielsweise eine Wärmepumpe mit einem Hydraulikmodul sowie einem Kältemittelkreislauf mit einem Verdichter, einem Verflüssiger, einem Verdampfer und einem Expansionsventil bekannt, wobei das Hydraulikmodul in die Wärmepumpe eingebaut ist, wobei ein Vorlaufanschluss mit einer Vorlaufleitung der Wärmepumpe und wenigstens ein erster Rücklaufanschluss mit einer Rücklaufleitung der Wärmepumpe zumindest fluidtechnisch in Verbindung stehen. Der Rücklaufanschluss ist dabei beispielsweise zunächst ein Vorlauf für den Heizkreis, bevor das Fluid nach Durchströmen des Heizkreises wieder über die Rücklaufleitung zur Wärmepumpe führt. Das Hydraulikmodul weist ein Gehäuse mit wenigstens dem Vorlaufanschluss, wenigstens dem ersten Rücklaufanschluss, durch das ein Fluid leitbar ist und einem Heizkörper auf, wobei das Gehäuse zur Fluidführung aus wenigstens einer ersten Wand und einer zweiten aus Kunststoff spritzgegossenen Wand gebildet ist, die mit einem Schweißverfahren miteinander verbunden sind, wobei die erste mit der zweiten Wand eine dauerhaft wasser- und druckdichte Kavität zur Aufnahme des Heizkörpers bildet, eine fluidleitende Verbindung der Kavität mit dem Vorlaufanschluss und dem ersten Rücklaufanschluss besteht, ein 3/2-Wegeventil vorgesehen ist, mit dem eine Wärmenutzungsseite der Wärmepumpe zwischen Heizungsbetrieb und Warmwasserbereitung umgeschaltet werden kann, wobei das Hydraulikmodul den ersten Rücklaufanschluss und einen zweiten Rücklaufanschluss zum Anschluss jeweils einer Rücklaufleitung von der Heizung und der Warmwasseranlage aufweist, wobei die Kavität durch einen Heizflansch wasserdicht und druckdicht verschlossen ist.

Das 3/2-Wegeventil dient demnach dazu, einen zufließenden Wärmepumpenwasservolumenstrom zwischen zwei Anwendungen umzuschalten, insbesondere zwischen einer Nutzung im Heizkreis oder zur Warmwasserbereitung, vorzugsweise in Form eines Warmwasserspeichers.

Das 3/2-Wegeventil muss hierbei eine besonders zuverlässige und sichere Dichtung bereitstellen, ohne dass mechanisch komplexe oder unnötig leistungsstarke Komponenten, beispielsweise Elektromotoren, verwendet werden. Gleichzeitig soll eine lange Haltbarkeit der Komponenten im Dauereinsatz, das heißt insbesondere bei Kontakt mit Wasser, gewährleistet sein.

Vor diesem Hintergrund war es eine Aufgabe der vorliegenden Erfindung, ein 3/2-Wegeventil zum Einsatz in Wärmepumpen, insbesondere in Hydraulikmodulen von Wärmepumpen, zu verbessern.

Die Aufgabe wird erfindungsgemäß mit einem 3/2-Wegeventil nach Anspruch 1 gelöst. Bevorzugte Ausgestaltungen sind in den Unteransprüchen angegeben.

Somit wird ein 3/2-Wegeventil, insbesondere Heizungsumschaltventil, vorgeschlagen, umfassend einen Ventilkolben, einen Linearantrieb, der dazu ausgebildet ist, den Ventilkolben in einer Axialrichtung des Ventilkolbens linear zwischen einer ersten Position und einer zweiten Position zu verfahren, und eine elastische Dichtanordnung, die radial den Ventilkolben umlaufend angeordnet ist, derart, dass die elastische Dichtanordnung sowohl in der ersten Position als auch in der zweiten Position durch Deformation eine Abdichtung an einem jeweiligen Dichtsitz hervorruft. Die elastische Dichtanordnung ist als einteiliges Dichtelement ausgeführt.

Die erfindungsgemäße Ausgestaltung mit einem einteiligen Dichtelement schafft es verglichen mit bekannten Dichtanordnungen, die Anzahl der benötigten Dichtelemente zu reduzieren. So war bislang bekannt, beispielsweise O-Ringe beiderseitig auf dem Ventilkolben zu montieren, so dass je ein O-Ring für die Abdichtung in der ersten bzw. zweiten Position vorgesehen ist.

Das erfindungsgemäße 3/2-Wegeventil kann beispielsweise dazu zum Einsatz kommen, einen Warmwasser- bzw. Heizungswasservolumenstrom der von einer Wärmepumpe erwärmt wird, zwischen zwei Verbraucherkreisen umzuschalten, beispielsweise einem Heizkreis zur direkten Aufheizung von Räumen und einem Warmwasserspeicher zum Abgeben der Wärme an den Warmwasserspeicher.

Das 3/2-Wegeventil kann demnach dafür sorgen, dass nicht ständig ein Volumenstrom durch beide Verbrauchskreise strömt, sondern die Möglichkeit besteht, einen der beiden Kreise zu schließen, so dass die gesamte durch die Wärmepumpe erzeugte Wärme in nur einem der beiden Verbraucherkreise eingesetzt wird. Auch Zwischenstufen des 3/2-Wegeventils sind vorstellbar, so dass ein anteiliger Volumenstrom durch beide Verbraucherkreise entsteht. Jedenfalls kann in der ersten und zweiten Position eine sichere Abdichtung des jeweils anderen Anschlusses des Verbraucherkreises gewährleistet werden.

Vorzugsweise weist der Ventilkolben eine Nut zur Aufnahme des Dichtelementes auf, wobei die Nut in Axialrichtung beiderseitig gleich begrenzt ist.

Bisher, insbesondere bei der Verwendung von O-Ringen als Dichtungselemente, war es nötig, dass eine Begrenzung der Aufnahme des Dichtelementes unsymmetrisch ausgebildet ist, so dass die Aufnahme eine Gegenkraft auf das Dichtelement auswirken kann, ohne dass das Dichtelement bei Anlegen eines benötigten Anpressdruckes aus der Aufnahme gleitet. Die erfindungsgemäße einteilige Ausgestaltung des Dichtelementes ermöglicht, dass die Nut beiderseitig symmetrisch ausgestaltet ist.

Die Begrenzung der Nut kann entweder exakt in Radialrichtung ausgerichtet sein oder zu der Radialrichtung geneigt ausgeführt sein. Die senkrecht auf der Axialrichtung ausgeführte Begrenzung hat fertigungstechnische Vorteile, eine Neigung der Begrenzung derart, dass eine Hinterschneidung zum Eingriff durch das Dichtelement ermöglicht ist, kann eine verbesserte Aufnahme des Dichtelementes bereitstellen.

Vorzugsweise weist das Dichtelement eine im Querschnitt gerade innere Auflagefläche auf, die zur Auflage an dem Ventilkolben ausgebildet ist.

Die gerade innere Auflagefläche ist also in Axialrichtung ausgedehnt und ermöglicht eine großflächige Auflage des Dichtelementes auf dem Ventilkolben. Damit kann insbesondere ein Verrutschen in Axialrichtung verhindert werden. Zudem ist die in Axialrichtung gerade innere Auflagefläche einfach zu fertigen und erfordert auch auf Seite des Ventilkolbens keine besonderen Ausführungen wie Rundungen etc.

Vorzugsweise weist das Dichtelement eine zu der inneren Auflagefläche konzentrische äußere Hauptfläche auf, die im Querschnitt gerade verläuft und in axialer Erstreckung kürzer als die innere Auflagefläche ausgebildet ist.

Vorzugsweise weist das Dichtelement beiderseitig in Axialrichtung Dichtfortsätze auf, die axial über die innere Auflagefläche hinausragen und radial sowie axial über die äußere Hauptfläche hinausragen.

Vorzugsweise sind die Dichtfortsätze zur Anlage an den jeweiligen Dichtsitzen ausgebildet.

Erfindungsgemäß weist das Dichtelement im Querschnitt eine sich radial nach außen verbreiternde axiale Ausdehnung auf.

Vorzugsweise weist das Dichtelement gekrümmte Seitenflächen auf, die sich von dem Ventilkolben mit konkavem Verlauf erstrecken.

Die Dichtfortsätze wirken als Dichtlippen und sind hauptsächlich für die sichere Abdichtung in dem jeweiligen Dichtsitz verantwortlich. Die Dichtfortsätze werden in radialer Richtung von den Seitenflächen des Dichtelementes und in axialer Richtung von der äußeren Hauptfläche gestützt, so dass eine definierte elastische Verformung ermöglicht ist.

Insbesondere ist es durch die bevorzugte Form des Dichtelementes möglich, die elastische Verformung mit geringer Anpresskraft reproduzierbar zu ermöglichen. Damit wird eine verbesserte Abdichtung auch im häufigen Betrieb ermöglicht. Zudem kann durch eine geringe Axialsteifigkeit des Dichtelementes die Verstellkraft des Linearantriebs geringer ausfallen.

Erfindungsgemäß umfasst das 3/2-Wegeventil ferner zwei Dichtsitze, die in der ersten bzw. zweiten Position eine Dichtauflage für das Dichtelement ausbilden, wobei jeder der Dichtsitze je wenigstens einen Dichtanschlag aufweist, der derart angeordnet ist, dass der Ventilkolben in der ersten bzw. zweiten Position an dem Dichtanschlag anschlägt.

Vorzugsweise ist eine Axialsteifigkeit des Dichtanschlags erheblich größer, beispielsweise um einen Faktor größer als zehn, als die Axialsteifigkeit des Dichtelementes im Bereich der Profildichtung, d.h. im Bereich der Fläche, die mit dem Dichtsitz in Berührung kommt. Damit ist die Deformation der Profildichtung des Dichtelementes limitiert und reproduzierbar.

Der Dichtanschlag ist um einen Verfahrwegsbetrag hinter dem Anlagepunkt der Profildichtung angeordnet, so dass sich das Dichtelement um den Verfahrwegsbetrag elastisch verformt. Auch wenn es eine Ungenauigkeit eines Verfahrweges des Linearantriebs gibt, ist demnach die maximale Verformung des Dichtelementes durch den Dichtanschlag bestimmt. Damit ist eine zuverlässige, residuale Verformung des Profildichtrings gewährleistet.

In einem weiteren Aspekt wird ein Hydraulikmodul, insbesondere für eine Wärmepumpe, bereitgestellt, mit einem erfindungsgemäßen 3/2-Wegeventil, einem Zulauf, insbesondere für einen zufließenden Warmwasservolumenstrom, einem ersten Ablauf, insbesondere zu einem Heizkreis, und einem zweiten Ablauf, insbesondere zu einem Warmwasserspeicher, wobei das 3/2-Wegeventil in der ersten Position den ersten Ablauf abdichtet und in der zweiten Position den zweiten Ablauf abdichtet.

In einem weiteren Aspekt wird eine Wärmepumpe mit einem erfindungsgemäßen Hydraulikmodul, einem Wärmepumpenkreislauf, und einem Kältemittelkreislauf bereitgestellt. Der Kältemittelkreislauf, insbesondere ein Verflüssiger des Kältemittelkreislaufs, ist mit dem Wärmepumpenkreislauf zur Wärmeübertragung gekoppelt. Ein Wärmepumpenvorlauf des Wärmepumpenkreises ist über den Zulauf mit dem 3/2-Wegeventil verbunden. Der erste Ablauf und der zweite Ablauf sind über einen Wärmepumpenrücklauf des Wärmepumpenkreises verbunden.

Das erfindungsgemäße Hydraulikmodul bzw. die erfindungsgemäße Wärmepumpe lassen sich unter Erreichung der selben Vorteile mit den als bevorzugt beschriebenen Ausführungen des 3/2-Wegeventils kombinieren.

Weitere Ausgestaltungen und besondere Vorteile werden nachfolgend unter Verweis auf die beigefügten Zeichnungen beschrieben. Hierbei zeigen:
- Fig. 1: schematisch und exemplarisch ein 3/2-Wegeventil;
- Fig. 2: schematisch und exemplarisch ein 3/2-Wegeventil gemäß der vorliegenden Offenbarung;
- Fig. 3: schematisch und exemplarisch eine weitere Ansicht des 3/2-Wegeventils der Fig. 2; und
- Fig. 4: schematisch und exemplarisch eine Detailansicht des 3/2-Wegeventils.

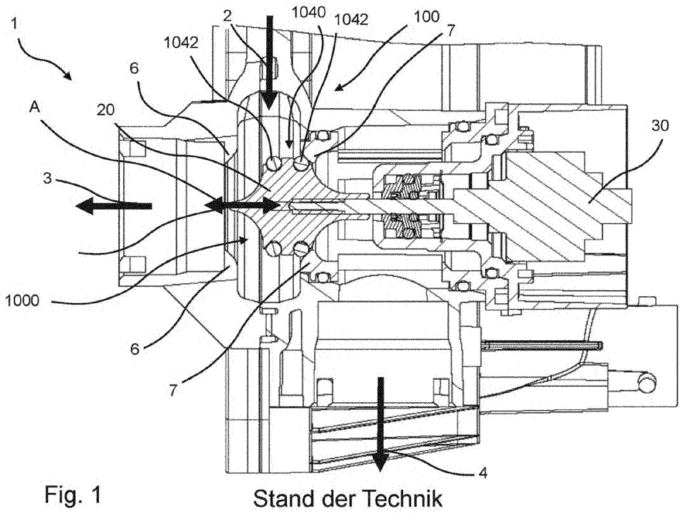

Fig. 1 zeigt schematisch und exemplarisch ein herkömmliches 3/2-Wegeventil 1000, das als Teil einer Hydraulikbaugruppe 100 einer Wärmepumpe 1 ausgeführt ist. Das 3/2-Wegeventil 1000 ist ein Umschaltventil, beispielsweise ein Heizungsumschaltventil, das in dem Hydraulikmodul 100 der Wärmepumpe 1 integriert ist und einen Volumenstrom aus einem Zulauf 2 entweder zu einem ersten Ablauf 3 oder einem zweiten Ablauf 4 leitet.

Es ist beispielsweise so, dass die Wärmepumpe 1 einen Kältemittelkreislauf enthält, über den Umgebungswärme auf ein gewünschtes Wärmeniveau gehoben wird, das beispielsweise an einen Warmwasserkreis bzw. Wärmepumpenkreislauf angeschlossen ist. Durch das Hydraulikmodul 100 fließt dann der Wärmepumpenkreislauf, wobei dieser eben über den Zulauf 2 in das Hydraulikmodul 100 einströmt und davon teilweise oder vollständig zu dem ersten Ablauf 3 bzw. dem zweiten Ablauf 4 geleitet wird.

An den ersten Ablauf 3 ist beispielsweise ein Heizkreis anschließbar, über den Wohnräume mit Wärme versorgt werden. Über den zweiten Ablauf 4 kann dann ein Warmwasserspeicher angeschlossen sein, sodass die von der Wärmepumpe 1 erzeugte Wärme zur Verwendung als Warmwasser gespeichert ist. Üblicherweise ist der Warmwasservolumenstrom der Wärmepumpe 1 von einem Brauchwasser entkoppelt, sodass das Hydraulikmodul 100 nicht in direkter Fluidverbindung beispielsweise mit einer Zapfstelle steht.

Um zwischen dem ersten Ablauf 3 und dem zweiten Ablauf 4 umzuschalten, wird ein Ventilkolben 20 mittels eines Linearantriebs 30, beispielsweise eines elektrischen Linearantriebs, in einer Axialrichtung A zwischen einer ersten Position und einer zweiten Position verfahren.

In der gezeigten ersten Position ist der zweite Ablauf 4 verschlossen, da eine elastische Dichtanordnung 1040 des 3/2-Wegeventils 1000 an einem Dichtsitz 7 dichtend aufliegt. Hierfür weist die Dichtanordnung 1040 in diesem Beispiel O-Ringe 1042 auf. Nach axialer Verschiebung des Ventilkolbens 10 liegt die Dichtanordnung 1040 dicht an einem weiteren Ventilsitz 6 an, sodass der erste Ablauf 3 verschlossen ist und der Volumenstrom durch den zweiten Ablauf 4 geführt ist.

Die Abdichtung an den jeweiligen Dichtsitzen 6, 7 erfolgt aufgrund des Deformationsvermögens der Dichtelemente 1042. Diese werden durch Andrücken mittels des Linearantriebs 30 abgedichtet. Die erforderliche Axialverstellkraft des Linearantriebs 30 muss vergleichsweise groß sein, damit die Dichtelemente 1042 auch größere Unebenheiten der Dichtflächen der Dichtsitze 6, 7 ausgleichen und abdichten.

Eine Verringerung der Steifigkeit der Dichtgeometrie ist nicht beliebig möglich, da das Dichtelement 1042 sonst nicht zuverlässig mit dem Ventilkolben 10 verbunden bleibt. Aus Fig. 1 kann exemplarisch gesehen werden, dass zwischen den beiden als O-Ringe ausgeführten Dichtelementen 1042 eine signifikante Flanke des Ventilkolbens 10 ausgebildet ist, die ein axiales Verrutschen des jeweiligen Dichtelementes 1042 erheblich erschwert.

Wird für eine typische Verstellkraft des Linearantriebes 30 ein Bereich zwischen 30 N und 60 N angenommen und die Axialsteifigkeit der Dichtelemente 1042 beispielsweise von etwa 200 N/mm angesetzt, ergibt sich eine elastische Verformung von etwa 0,15 mm - 0,3 mm, was sehr gering ist. In der gezeigten Ausführung ist eine sichere Dichtung nur bei hinreichend großer Motorkraft und auch nur dann eingeschränkt möglich, da die Dichtelemente 1042 lediglich eine geringe elastische Verformung ermöglichen.

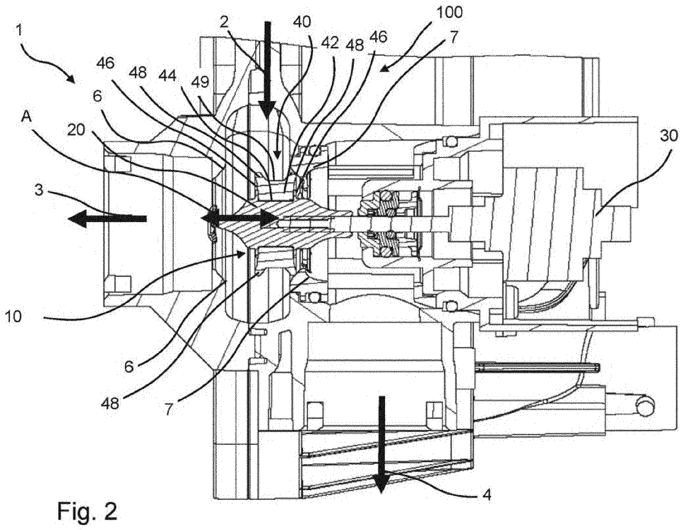

Fig. 2 zeigt schematisch und exemplarisch die Wärmepumpe 1 der Fig. 1 mit einem erfindungsgemäßen 3/2-Wegeventil 10. Die Funktion des 3/2-Wegeventils 10 entspricht der Funktion des 3/2-Wegeventils 1000 der Fig. 1, wobei die erfindungsgemäß verbesserte Ausführung der Dichtanordnung 40 in Fig. 2 erkennbar ist.

Die Dichtanordnung 40 besteht aus einem einteiligen Dichtelement 42, das eine Geometrie aufweist, die eine wesentlich reduzierte Axialsteifigkeit verglichen mit den Dichtelementen 1042 ermöglicht. Die weit geringere Axialsteifigkeit der Dichtung sorgt für ein erheblich verbessertes Abdichtvermögen. Beispielsweise kann die Axialsteifigkeit dieser Dichtanordnung 40 im Bereich von 25 N/mm liegen und damit bei etwa 1/8 der Axialsteifigkeit der Dichtanordnung 1040, wenn der gleiche Dichtungswerkstoff, beispielsweise ein 50 Shore-A Dichtungswerkstoff, verwendet wird.

Gleichzeitig ermöglicht die Geometrie des Dichtelementes 42, dass ein Verrutschen in Axialrichtung verhindert wird und demnach ein sicherer Halt in dem Ventilkegel gewährleistet ist. Zu diesem Zweck ist das Dichtelement 42 mit einer inneren Auflagefläche 44 und zwei Seitenflächen 46, die an eine Nut des Ventilkolbens 20 eingreifen, an dem Ventilkolben 20 angeordnet.

Das Dichtelement 42 kommt mit den jeweiligen Dichtsitzen 6, 7 über beiderseitig in Axialrichtung angeordnete Dichtfortsätze 48 in Kontakt, zwischen denen sich eine radial zurückgezogene Fläche 49 befindet, die in etwa parallel zu der inneren Auflagefläche 44 ausgebildet ist.

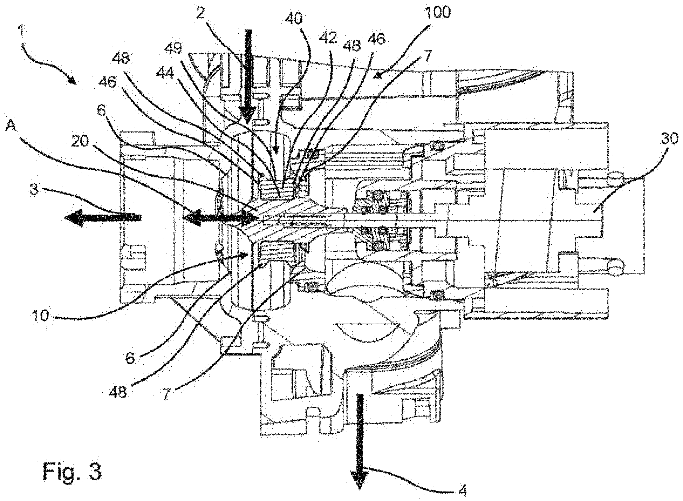

Fig. 3 zeigt schematisch und exemplarisch einen weiteren Querschnitt des erfindungsgemäßen 3/2-Wegeventils 10.

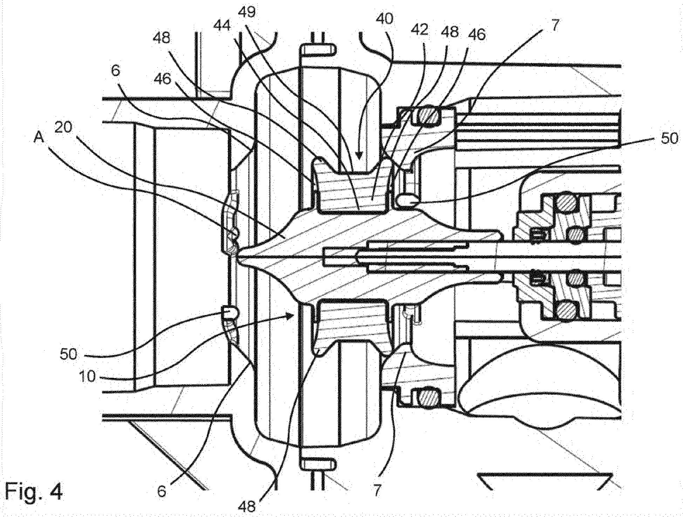

Fig. 4 zeigt schematisch und exemplarisch den Ventilkolben 20 sowie das erfindungsgemäße Dichtelement 42 vergrößert. In Fig. 4 sind weiter Dichtanschläge 50 angeordnet, die in beiden Positionen den Ventilkolben 20 axial beschränken. Die Dichtanschläge 50 weisen eine im Vergleich mit dem Dichtelement 42 erheblich höhere Axialsteifigkeit von beispielsweise 300 N/mm auf und sorgen dafür, dass die Deformation des Profildichtringes des Dichtelementes 42 limitiert und somit reproduzierbar wird. Hierfür schlagen die Anschläge 50 direkt an den Ventilkolben 20 oder an einen Bereich des Dichtelementes 42, der nicht den Dichtfortsätzen 48 entspricht, an.

Die Dichtanschläge 50 ermöglichen, dass sich die erreichte Ventilendposition bei sich verändernder Motorkraft bzw. bei sonstigem Toleranzverschleiß oder anderweitig bedingten Schwankungen der Motorverstellkraft, nicht verändert. Damit ist der Ventilverstellweg in den jeweiligen Dichtsitz hinein konstant. Dies ermöglicht in vorteilhafter Weise ebenfalls, dass die genaue Distanz der beiden gegenüberliegenden Ventilantriebsendpositionen bekannt und unveränderlich ist. Die Anschläge 50 sind jeweils in Verfahrwegrichtung hinter dem jeweiligen Ventilsitz angeordnet. Beispielsweise ist es vorteilhaft, den harten Anschlag 50 ventilverfahrwegbezogen 1 mm hinter dem eigentlichen Anschlagepunkt der Dichtsitze 6 bzw. 7 bereitzustellen. Der sich ergebende Unterschied im Verfahrweg in den jeweiligen Ventilsitz hinein wird minimal, wobei gleichzeitig eine zuverlässige residuale Verformung des Profildichtringes des Dichtelementes 42 gewährleistet wird.

## Patentansprüche

1. 3/2-Wegeventil (10), insbesondere Heizungsumschaltventil, umfassend:
- einen Ventilkolben (20),
- einen Linearantrieb (30), der dazu ausgebildet ist, den Ventilkolben (20) in einer Axialrichtung (A) des Ventilkolbens (20) linear zwischen einer ersten Position und einer zweiten Position zu verfahren,
- eine elastische Dichtanordnung (40), die radial den Ventilkolben (20) umlaufend angeordnet ist, derart, dass die elastische Dichtanordnung (40) sowohl in der ersten Position als auch in der zweiten Position durch Deformation eine Abdichtung an einem jeweiligen Dichtsitz (6, 7) hervorruft, und
- zwei Dichtsitze (6, 7), die in der ersten bzw. zweiten Position eine Dichtauflage für das Dichtelement (42) ausbilden,
- wobei die elastische Dichtanordnung (40) als einteiliges Dichtelement (42) ausgeführt ist,
- wobei jeder der Dichtsitze (6, 7) je wenigstens einen Dichtanschlag (50) aufweist, der derart angeordnet ist, dass der Ventilkolben (20) bzw. das Dichtelement (42) in der ersten bzw. zweiten Position an dem Dichtanschlag (50) anschlägt, und
- wobei der Dichtanschlag (50) um einen Verfahrwegsbetrag in der Axialrichtung (A) hinter dem Anlagepunkt einer Profildichtung des Dichtelementes (42) angeordnet ist, so dass sich das Dichtelement um den Verfahrwegsbetrag elastisch verformt,
**dadurch gekennzeichnet, dass**
das Dichtelement (42) im Querschnitt eine sich radial nach außen verbreiternde axiale Ausdehnung aufweist.

2. 3/2-Wegeventil (10) nach Anspruch 1, wobei der Ventilkolben (20) eine Nut zur Aufnahme des Dichtelementes (42) aufweist, wobei die Nut in Axialrichtung beiderseitig gleich begrenzt ist.

3. 3/2-Wegeventil (10) nach einem der vorstehenden Ansprüche, wobei das Dichtelement (42) eine im Querschnitt gerade innere Auflagefläche (44) aufweist, die zur Auflage an dem Ventilkolben (20) ausgebildet ist.

4. 3/2-Wegeventil (10) nach Anspruch 3, wobei das Dichtelement (42) eine zu der inneren Auflagefläche (44) konzentrische äußere Hauptfläche (49) aufweist, die im Querschnitt gerade verläuft und in axialer Erstreckung kürzer als die innere Auflagefläche ausgebildet ist.

5. 3/2-Wegeventil (10) nach Anspruch 4, wobei das Dichtelement (42) beiderseitig in Axialrichtung Dichtfortsätze (48) aufweist, die axial über die innere Auflagefläche hinausragen und radial sowie axial über die äußere Hauptfläche hinausragen.

6. 3/2-Wegeventil (10) nach Anspruch 5, wobei die Dichtfortsätze (48) zur Anlage an den jeweiligen Dichtsitzen (6, 7) ausgebildet sind.

7. 3/2-Wegeventil (10) nach einem der vorstehenden Ansprüche, wobei das Dichtelement (42) gekrümmte Seitenflächen (46) aufweist, die sich von dem Ventilkolben (20) mit konkavem Verlauf erstrecken.

8. Hydraulikmodul (100), insbesondere für eine Wärmepumpe, mit
- einem 3/2-Wegeventil (10) nach einem der vorstehenden Ansprüche,
- einem Zulauf (2), insbesondere für einen zufließenden Warmwasservolumenstrom,
- einem ersten Ablauf (3), insbesondere zu einem Heizkreis, und
- einem zweiten Ablauf (4), insbesondere zu einem Warmwasserspeicher,
wobei das 3/2-Wegeventil (10) in der ersten Position den ersten Ablauf (3) abdichtet und in der zweiten Position den zweiten Ablauf (4) abdichtet.

9. Wärmepumpe (1) mit
- einem Hydraulikmodul (100) nach Anspruch 8,
- einem Wärmepumpenkreislauf, und
- einem Kältemittelkreislauf, wobei
- der Kältemittelkreislauf, insbesondere ein Verflüssiger des Kältemittelkreislaufs, mit dem Wärmepumpenkreislauf zur Wärmeübertragung gekoppelt ist,
- ein Wärmepumpenvorlauf des Wärmepumpenkreises über den Zulauf (2) mit dem 3/2-Wegeventil (100) verbunden ist
- der erste Ablauf (3) und der zweite Ablauf (4) über einen Wärmepumpenrücklauf des Wärmepumpenkreises verbunden sind.

## Claims

1. A 3/2-way valve (10), in particular heating switchover valve, comprising:
- a valve piston (20),
- a linear drive (30), which is designed to move the valve piston (20) linearly in an axial direction (A) of the valve piston (20) between a first position and a second position,
- an elastic sealing arrangement (40), which is arranged radially around the valve piston (20) in such a way that the elastic sealing arrangement (40) produces a seal at a sealing seat (6, 7) by deformation both in the first position and in the second position, and
- two sealing seats (6, 7), which form a sealing support for the sealing element (42) in the first position and the second position respectively,
- the elastic sealing arrangement (40) being designed as a one-piece sealing element (42),
- each of the sealing seats (6, 7) having at least one sealing stop (50) which is arranged in such a way that the valve piston (20) or the sealing element (42) abuts against the sealing stop (50) in the first or second position, and
- the sealing stop (50) being arranged behind the contact point of a profiled seal of the sealing element (42) by an amount of travel in the axial direction (A), such that the sealing element is elastically deformed by the amount of travel,
**characterised in that**
the sealing element (42) in cross section has an axial extension that widens radially outwards.

2. The 3/2-way valve (10) according to claim 1, wherein the valve piston (20) has a groove for receiving the sealing element (42), the groove being delimited in an identical manner on both sides in the axial direction.

3. The 3/2-way valve (10) according to any one of the preceding claims, wherein the sealing element (42) has an inner support surface (44) which is straight in cross section and is designed for support against the valve piston (20).

4. The 3/2-way valve (10) according to claim 3, wherein the sealing element (42) has an outer main surface (49) which is concentric with the inner support surface (44), extends straight in cross section and is designed shorter in axial extent than the inner support surface.

5. The 3/2-way valve (10) according to claim 4, wherein the sealing element (42) has sealing protrusions (48) on both sides in the axial direction, which project axially beyond the inner support surface and project radially and axially beyond the outer main surface.

6. The 3/2-way valve (10) according to claim 5, wherein the sealing protrusions (48) are designed to bear against the sealing seats (6, 7).

7. The 3/2-way valve (10) according to any one of the preceding claims, wherein the sealing element (42) has curved side surfaces (46) extending with a concave profile from the valve piston (20).

8. A hydraulic module (100), in particular for a heat pump, having
- a 3/2-way valve (10) according to any one of the preceding claims,
- an inlet (2), in particular for an inflowing hot water volume flow,
- a first outlet (3), in particular to a heating circuit, and
- a second outlet (4), in particular to a hot water storage tank,
wherein the 3/2-way valve (10) seals the first outlet (3) in the first position and seals the second outlet (4) in the second position.

9. A heat pump (1) having
- a hydraulic module (100) according to claim 8,
- a heat pump circuit, and
- a refrigerant circuit, wherein
- the refrigerant circuit, in particular a condenser of the refrigerant circuit, is coupled with the heat pump circuit for heat transfer,
- a heat pump supply flow of the heat pump circuit is connected to the 3/2-way valve (100) via the inlet (2), and
- the first outlet (3) and the second outlet (4) are connected via a heat pump return flow of the heat pump circuit.

## Revendications

1. Vanne 3/2 voies (10), notamment vanne de commutation de chauffage, comprenant :
- un piston de vanne (20),
- un actionneur linéaire (30) conçu pour déplacer le piston de vanne (20) de manière linéaire dans une direction axiale (A) du piston de vanne (20), entre une première position et une seconde position,
- un ensemble d'étanchéité élastique (40) disposé radialement sur toute la périphérie du piston de vanne (20), de telle manière que, tant dans la première position que dans la seconde position, l'ensemble d'étanchéité élastique (40) assure, par déformation, l'étanchéité au niveau d'un siège d'étanchéité (6, 7) respectif, et
- deux sièges d'étanchéité (6, 7) qui, dans la première ou la seconde position, forment un appui d'étanchéité pour l'élément d'étanchéité (42),
- l'ensemble d'étanchéité élastique (40) étant réalisé sous la forme d'un élément d'étanchéité (42) d'une seule pièce,
- chacun des sièges d'étanchéité (6, 7) présentant au moins une butée d'étanchéité (50) disposée de telle manière que le piston de vanne (20) ou l'élément d'étanchéité (42) vient buter contre la butée d'étanchéité (50) dans la première ou la seconde position, et
- la butée d'étanchéité (50) étant disposée, dans la direction axiale (A), à une distance égale à la course de déplacement derrière le point de contact d'un joint d'étanchéité profilé de l'élément d'étanchéité (42), de telle sorte que l'élément d'étanchéité se déforme élastiquement d'une distance égale à la course de déplacement,
**caractérisée en ce que**
l'élément d'étanchéité (42) présente, en section transversale, une extension axiale s'évasant radialement vers l'extérieur.

2. Vanne 3/2 voies (10) selon la revendication 1, dans laquelle le piston de vanne (20) présente une rainure destinée à recevoir l'élément d'étanchéité (42), ladite rainure étant délimitée de manière identique des deux côtés dans la direction axiale.

3. Vanne 3/2 voies (10) selon l'une des revendications précédentes, dans laquelle l'élément d'étanchéité (42) présente une surface d'appui intérieure (44) rectiligne en section transversale, conçue pour venir en appui sur le piston de vanne (20).

4. Vanne 3/2 voies (10) selon la revendication 3, dans laquelle l'élément d'étanchéité (42) présente une surface principale extérieure (49) concentrique par rapport à la surface d'appui intérieure (44), qui est rectiligne en section transversale et dont la longueur axiale est inférieure à la surface d'appui intérieure.

5. Vanne 3/2 voies (10) selon la revendication 4, dans laquelle l'élément d'étanchéité (42) présente des deux côtés, dans la direction axiale, des saillies d'étanchéité (48), qui dépassent axialement de la surface d'appui intérieure et qui dépassent radialement et axialement de la surface principale extérieure.

6. Vanne 3/2 voies (10) selon la revendication 5, dans laquelle les saillies d'étanchéité (48) sont conçues pour venir s'appliquer sur les sièges d'étanchéité (6, 7) respectifs.

7. Vanne 3/2 voies (10) selon l'une des revendications précédentes, dans laquelle l'élément d'étanchéité (42) présente des surfaces latérales courbes (46) qui s'étendent à partir du piston de vanne (20) en formant une courbe concave.

8. Module hydraulique (100), notamment pour une pompe à chaleur, comportant
- une vanne 3/2 voies (10) selon l'une des revendications précédentes,
- une entrée (2), notamment pour un débit volumique d'eau chaude affluant,
- une première sortie (3), notamment vers un circuit de chauffage, et
- une seconde sortie (4), notamment vers un ballon d'eau chaude,
la vanne 3/2 voies (10) bloquant la première sortie (3) dans la première position et bloquant la seconde sortie (4) dans la seconde position.

9. Pompe à chaleur (1) comportant
- un module hydraulique (100) selon la revendication 8,
- un circuit de pompe à chaleur, et
- un circuit de fluide frigorigène, étant entendu que
- le circuit de fluide frigorigène, notamment un condenseur dudit circuit de fluide frigorigène, est couplé au circuit de pompe à chaleur pour le transfert de chaleur,
- un départ de pompe à chaleur du circuit de pompe à chaleur est raccordé à la vanne 3/2 voies (100) par le biais de l'entrée (2)
- la première sortie (3) et la seconde sortie (4) sont raccordées par le biais d'un retour de pompe à chaleur du circuit de pompe à chaleur.
